# EUROPEAN PATENT APPLICATION

(11) **EP 2 650 258 A2**
(43) Date of publication of application: **16.10.2013**
(21) Application number: 11846868.5
(22) Date of filing: 07.12.2011
(51) Int. Cl.: C01B 3/38, C01B 3/54, B01J 23/04, B01J 19/24

(54) **GASIFICATION METHOD FOR REDUCING EMISSION OF CARBON DIOXIDE**

(30) Priority: 08.12.2010 KR 20100124651; 05.12.2011 KR 20110129125
(71) Applicant: SK Innovation Co., Ltd., Seoul 110-110 (KR); Park, Joo Won, Daejeon 302-171 (KR)
(72) Inventor: KIM, Jin Hong, Daejeon 302-726 (KR); YANG, Ja Hyun, Daejeon 305-712 (KR); JEONG, Il Yong, Seoul 157-031 (KR); CHO, Dae Hee, Daejeon 305-763 (KR); KIM, Jeong Mook, Daejeon 305-810 (KR); KIM, Ok Youn, Daejeon 305-745 (KR); LEE, Jong Chan, Daejeon 305-746 (KR); KIM, Gyoo Tae, Daejeon 305-762 (KR); PARK, Sam Ryong, Daejeon 305-748 (KR); CHOI, Sun, Daejeon 305-550 (KR); OH, Seung Hoon, Seoul 135-270 (KR); SHIM, Hyun Min, Daejeon 305-728 (KR); PARK, Joo Won, Daejeon 302-171 (KR)
(74) Representative: Adam, Holger
(86) International application number: PCT/KR2011/009437
(87) International publication number: WO 2012/077978

(57) **Abstract**

Provided is a gasification method of a carbon-containing material, the method including: (a) reacting a carbon-containing material to be treated under the presence of a catalyst with steam to produce a syngas containing hydrogen, carbon monoxide and carbon dioxide; (b) generating a carbon dioxide rich gas by introducing a portion of the syngas that has produced in step (a) into a combustion process, and/or separating hydrogen and carbon monoxide from the syngas produced in step (a); and (c) recycling, to step (a), the carbon dioxide rich gas that has been produced in step (b). By the method, the necessity of separating or collecting and storing carbon dioxide for reducing carbon dioxide is eliminated to minimize costs for constructing a special device and facility for the separation or collecting and storage of the carbon dioxide.

## Description

### [Technical Field]

The present invention relates to a gasification method of a carbon-containing material such as coal, biomass or petroleum coke, and more particularly, to a gasification method capable of increasing a gasification rate and reducing an amount of carbon dioxide to be generated by using a catalyst at a low temperature.

### [Background Art]

With the rapid development of the society since the 20th century, an energy supply and demand system has become unstable and environmental problems such as global warming have increased. An attempt to use fossil energy by an environmentally friendly method along with a study on fuels that do not cause environmental pollution has been actively conducted. Particularly, compared to the direct combustion of coal which causes serous environmental pollution, attempts to convert coal into a gas fuel form such as a syngas has been tried continuously (referred to as "gasification").

In other words, the term "gasification" means that solid or liquid fuel which basically contains carbon such as coal, petroleum coke, and biomass is reacted with gas such as oxygen, steam, carbon dioxide, and hydrogen to produce combustible gases such as CO, H₂ and CH₄. The process is performed primarily at a high temperature and high pressure in order to maximize capacity and efficiency of a gasification treatment. The resultant combustible gases are used as a plant fuel gas, as chemicals or synthetic petroleum through a methanol synthesis process, an NH₃ synthesis process and a Fischer-Tropsch synthesis process, or as a hydrogen generation source for a hydrodesulphurisation process and a hydrocracking process of crude oil by maximizing hydrogen production.

Common gasification systems produce a syngas by reacting coal or other carbon-containing materials with steam and oxygen (or air). The "syngas" of the present invention is mainly formed of hydrogen and carbon monoxide, but the present invention is not limited thereto, and may additionally include components such as carbon dioxide and methane.

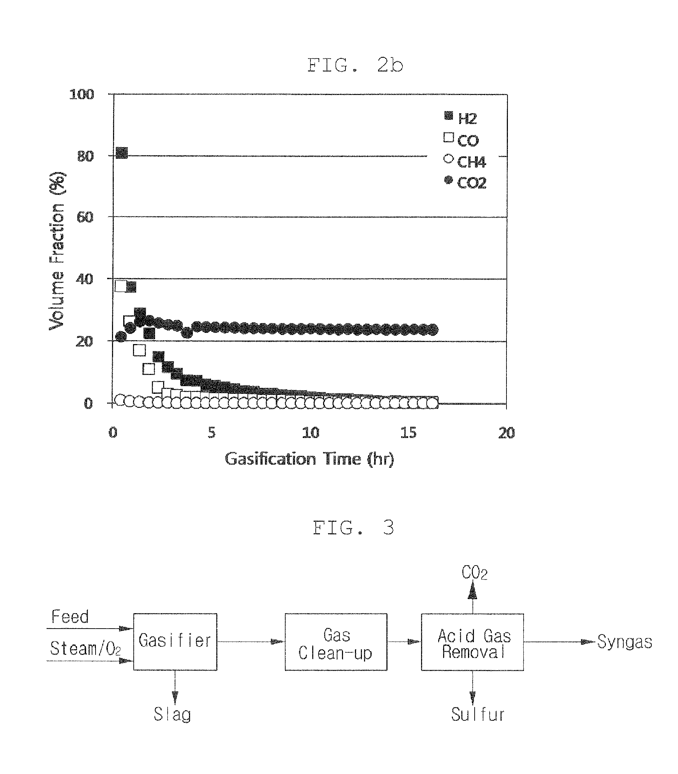

FIG. 3 schematically shows the conventional gasification process.

Referring to FIG. 3, H₂O, oxygen and a carbon-containing material (for example, coal, petroleum coke, biomass, and the like) are introduced to a gasifier. The carbon-containing material introduced to a gasifier is reacted with H₂O and oxygen both with a kind of catalysts and without catalysts, thus generating a product containing H₂, CO, CO₂, and the like. Then, the following main reactions occur in the gasifier.

C + H₂O → CO + H₂

C + CO₂ → 2CO

C + O₂ → CO₂

The product thus generated in the gasifier is subjected to a removal process of particular materials, Hg, and NOx, and then an acidic gas removal process of H₂S and CO₂. Subsequently, the resultant gas is selectively used for Fischer-Tropsch (F-T) reaction or MeOH reaction through the following water gas shift reaction, or may be used without changing excess H₂.

<water gas shift reaction>

CO + H₂O → H₂ + CO₂

<Fischer-Tropsch (F-T) reaction>

CO + 2H₂ → -(CH₂)ₙ- + H₂O

<Methanol synthesis>

CO + 2H₂ → CH₃OH

When a common steam/oxygen gasifier is used, since the carbon gasification reaction (C + H₂O → H₂ + CO or C + CO₂ → 2CO) is a very strong endothermic reaction, the corresponding heating value should be provided by the carbon combustion reaction (C + O₂ → CO₂). Therefore, a portion of hydrocarbon used as raw materials is converted into carbon dioxide in or out of the gasifier, after the combustion reaction. After the gasification, the syngas generated from the gasifier need to have a H₂/CO ratio of 2, which is stoichiometrically required in order that F-T synthesis or methanol generation is performed through the water gas shift reaction. In this case, it is calculated that the total process has a theoretical carbon efficiency of less than 49.8% and has a CO₂ generation amount of 0.502 mol CO₂/mol C or more. Then, carbon efficiency is defined as follows.

Carbon efficiency (%) =(the sum of the mole number of carbon monoxide and the mole number of methane in syngas having a H₂/CO of 2 to 2.1) × 100/mole number of carbon in raw materials introduced for gasification

**[Table 1]**

| | |
|---|---|
| Gasification reaction | 1.0C + 1.0H₂O → 1.0H₂ + 1.0CO |
| Combustion reaction | 0.34C + C.34 O₂ → 0.34CO₂ |
| Water gas shift reaction | 0.33CO + 0.33H₂O → 0.33H₂ + 0.33CO₂ |
| Entire reaction | 1.34C + 1.33H₂O + 0.34O₂ → 1.33H₂ + 0.67CO + 0.67CO₂ |

Such low carbon efficiency reduces economic efficiency of a Coal-to-Liquids (CTL) process, or the like. Further, in order to reduce CO₂ that is a greenhouse gas, additional facilities are required, high costs are required to collect and store carbon, and it is difficult to construct commercial plants with economic efficiency.

Korean patent Laid-open Publication No. 10-2008-0041635 discloses an alkaline metal catalytic steam gasification method which uses CO₂ trapping materials and/or mineral binder materials in a gas generation apparatus. The Patent Document discloses CO₂ trapping materials for converting CO₂ into solid carbonate or bicarbonate in order to improve catalyst activity. However, CO₂ may not be converted into substantially available materials such as CO. Further, there are problems where this Patent Document is limited to the specific catalyst and should additionally include CO₂ trapping materials such as CaO.

### [Disclosure]

### [Technical Problem]

The present inventors found that, there is no net generation of carbon dioxide, and efficiency of gasification process is increased, when the amount of carbon dioxide consumed by the C-CO₂ reaction is equal to the sum of the amount of carbon dioxide produced during the combustion of syngases and the amount of carbon dioxide produced by the water gas shift reaction. Thus, the present invention was accomplished.

Therefore, an object of the present invention is to provide a gasification method of carbon-containing materials, which may reduce a CO₂ generation amount, as well as achieve high carbon efficiency from carbon-containing materials such as coal, petroleum coke, and biomass at a low temperature.

### [Technical Solution]

In one general aspect, a gasification method of carbon-containing materials includes:

(a) reacting carbon-containing materials to be treated under the presence of a catalyst with steam to produce a syngas containing hydrogen, carbon monoxide and carbon dioxide;

(b) generating a carbon dioxide rich gas including at least one selected from i) introducing a portion of the syngas that has been produced in step (a) into the combustion process, and

ii) separating hydrogen and carbon monoxide from the syngas produced in step (a); and

(c) recycling, to step (a), the carbon dioxide rich gas that has been produced in step (b).

Examples of the catalysts that may be used in step (a) include general catalysts that may be used for the gasification reaction of carbon-containing materials, and preferably transition metal catalysts, or catalysts containing alkaline metals or alkaline earth metals. Examples of the alkaline metal components that may be used include Li, Na, K, Rb, Cs, Fr, and the like. Examples of the alkaline earth metal components that may be used include Mg, Ca, and the like. Examples of the transition metal catalysts that may be used include Fe, Ni, Co, Cu, Zn, and the like. The present invention is not limited thereto. Other metal components which is suitable to the object of the present invention may be used, which is evident to those skilled in the art.

Furthermore, the catalyst which may be used includes one or a mixture of at least two, of hydrates, oxides, and metal salts of the metal. In addition, the metal may be mixed with general gasification reaction catalysts.

The carbon-containing materials to be treated in step (a) may be used without limitation as long as they may be a material which is suitable to the object of the present invention. Typical examples thereof include coal, biomass, coke, or the like, but the present invention are not limited thereto.

Furthermore, in order to generate the carbon dioxide rich gas in step (b), one selected from introducing a portion of the syngas that has been produced in step (a) to the combustion process and separating hydrogen and carbon monoxide from the syngas may be used, or two processes thereof may be used at the same time. A portion of the syngas that has been produced in step (b) is introduced to the combustion process and thereby a heating value which is required for the gasification of carbon-containing materials according to the present invention may be supplied.

A combustion method includes general flame combustion, catalyst combustion, and the like. In order to control conditions at the time of introduction to a gasifier, methods such as Chemical Looping Combustion may be used. Two or more combustion methods may be combined for a higher effect.

According to a preferable specific example of the present invention, the present invention may further include:

(d) separating carbon dioxide from the syngas that has not been not introduced at the time of the combustion process in step (b).

Further, the present invention may further include:

(e) recycling, to step (a), the carbon dioxide that has been separated in step (d); or

(f) recycling, to the combustion process of step (b), the carbon dioxide that has been separated in step (d).

According to a preferable specific example of the present invention, the present invention may further include separating and recovering the catalyst used for the purpose of gasification. The catalyst may be separated and recovered at any time during the gasification according to the present invention, if necessary.

The catalyst recovery is performed such that effective catalyst components are recovered in liquid or solid state from the mixture of catalyst and ash. Specifically, during or after the completion of gasification in a gasifier, the catalyst may be recovered from the mixture of catalyst and ash emitted from the lower portion of the gasifier; or from the entrainment material in gas flow, by using an apparatus separately provided or integrally equipped with the gasifier.

### [Advantageous Effects]

By the gasification method of the invention, a gasification method in which carbon dioxide that is a greenhouse gas is not generated may be implemented. Also, carbon efficiency may be maximized, when chemicals such as methanol or production of synthetic oil are produced through the consecutive Fischer-Tropsch process after the gasification, and thus economic efficiency of the entire process may be improved.

Further, the existing gasification process needs Carbon Capture & Storage (CCS) or separation for reducing carbon dioxide because about 50% is emitted as carbon dioxide, with respect to the carbon included in raw materials. Therefore, huge costs are required for the practical use thereof.

When the gasification method for reducing emission of carbon dioxide of the present invention is used, costs for constructing a separate apparatus and facility for carbon dioxide capture and storage may be minimized, and thus the gasification process may be constructed economically.

### [Description of Drawings]

The above and other objects, features and advantages of the present invention will become apparent from the following description of preferred embodiments given in conjunction with the accompanying drawings, in which:

FIG. 1 shows the process of a gasification method according to a preferable specific example of the present invention;

FIGS. 2a and 2b show graphs showing a composition example of the syngas emitted from a gasifier, FIG. 2a is a graph showing the composition of the syngas at the time of steam-carbon dioxide gasification with use of a catalyst, and FIG. 2b is a graph showing the composition of the syngas at the time of steam-carbon dioxide gasification of lignite without use of a catalyst;

FIG. 3 shows a general process of high temperature steam-oxygen gasification; and

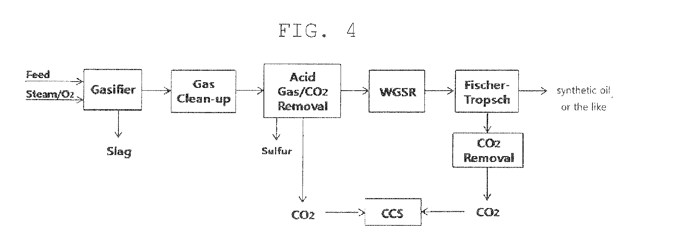

FIG. 4 shows a general CTL process made of a high temperature steam-oxygen gasifier.

### [Best Mode]

Hereinafter, the present invention will be described in detail with reference to the accompanying exemplary drawings and the following reaction formulae. However, exemplified drawings are only described to easily comprehend the present invention. Also, the scope of the present invention is not limited to those illustrated in the drawings, which is evident to those skilled in the art.

The present invention basically includes separating and recycling carbon dioxide after gasification using a catalyst, which promotes the C-CO₂ gasification reaction in a gasifier.

The gasification method according to the present invention discloses (a) reacting carbon-containing materials to be treated, such as coal, petroleum coke, biomass, and the like under the presence of a catalyst with steam to produce a syngas containing hydrogen, carbon monoxide and carbon dioxide.

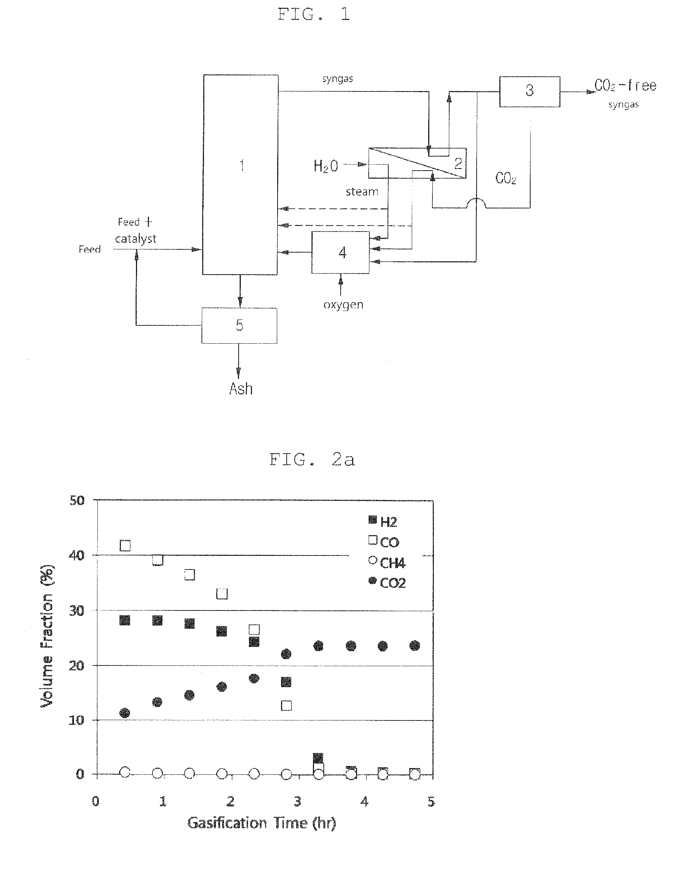

Additionally for the gasification, as shown in FIG. 1, coal, petroleum coke, biomass, and the like along with a catalyst are added to a gasifier 1.

Then, the following reactions are carried out in the gasifier 1:

C + H₂O → H₂ + CO, H_{R} = 131 KJ/mol (1)

C + CO₂ → 2CO, H_{R} = 174 KJ/mol (2)

CO + H₂O → H₂ + CO₂, H_{R} = -33.6 KJ/mol (3)

CO + 3H₂ → CH₄ + H₂O, H_{R} = -226.8 KJ/mol (4)

The reactions in the gasifier 1 result in production of a syngas containing hydrogen, carbon monoxide and carbon dioxide. Regardless of the steam gasification reaction, the reaction rate of the C-CO₂ reaction known as a carbon dioxide gasification reaction is generally slower than that of the steam gasification reaction at a low temperature. A catalyst is used to supplement the slower reaction rate of CO₂ reaction. Then, the catalyst that may be used in the present invention may include general catalysts that may be used for the gasification reaction of carbon-containing materials, and preferably include catalysts containing alkaline metals or alkaline earth metals. Examples of the alkaline metal components that may be used include Li, Na, K, Rb, Cs, Fr, and the like. Examples of the alkaline earth metals that may be used include Mg, Ca, and the like. Furthermore, the catalyst which may be used includes one or a mixture of at least two, of hydrates, oxides, and metal salts of the metal. In addition, the metal may be mixed with general gasification reaction catalysts.

The gasification may be preferably performed at a temperature of 750 to 850°C.

As shown in FIG. 1, the syngas generated from the gasifier 1 is subjected to separation of carbon dioxide from the syngas containing H₂ and carbon monoxide in a CO₂ separation section 3.

As shown in FIG. 1, the carbon dioxide thus separated may be recycled to a recycled line and supplied directly to the gasifier 1, or may be supplied to a catalytic combustion section 4 along with a portion of the syngas which has been emitted from the gasifier 1 and recycled to the recycled line. Then, the syngas that has been emitted from the gasifier 1 and recycled is burned in the catalytic combustion section 4, and thus a heating value required for the reaction, steam and carbon dioxide are supplied.

The main reaction formulae are as follows:

H₂ + 0.5O₂ → H₂O, H_{R} = -241.8 KJ/mol

CO + 0.5O₂ → CO₂, H_{R} = -283 KJ/mol

The carbon dioxide that has been produced by the combustion of carbon monoxide is converted into carbon monoxide through the C-CO₂ reaction in the gasifier 1, a portion of the generated carbon monoxide is converted into hydrogen and carbon dioxide through the water gas shift reaction. During this process, when the amount of carbon dioxide consumed by the C-CO₂ reaction is equal to the sum of the amount of carbon dioxide produced during the combustion of the syngases and the amount of carbon dioxide produced by the water gas shift reaction, there is no net generation of carbon dioxide, and therefore efficiency of gasification process is increased. Additionally, the carbon dioxide that has been recycled and steam that has been supplied to the gasifier 1 are allowed to increase a partial pressure of carbon dioxide and a partial pressure of steam as a gasification agent, which serves to promote the gasification reaction with steam and the gasification reaction with carbon dioxide.

FIG. 2 shows the composition of the syngas generated by the steam-carbon dioxide gasification of lignite containing 10 wt% of a K₂CO₃ catalyst and catalyst-free lignite. The composition of the syngas proceeded at the temperature of 800°C, the atmospheric pressure and the gage pressure of 1 Kgf/cm². Then, a partial pressure of steam was about 0.36 Kgf/cm² and a partial pressure of carbon dioxide was 0.19 Kgf/cm². When the catalyst is used as shown in FIG. 2a, carbon dioxide is converted into carbon monoxide by reaction with the carbon of coal, whereas carbon monoxide is not almost produced by the C-CO₂ reaction at the time of the gasification of catalyst-free coal. The effect is not limited to a K₂CO₃ catalyst.

The catalyst that has been subjected to gasification is recovered, and is supplied to the gasifier 1 again along with carbon-containing materials.

Hereinafter, the present invention will be described with reference to the Examples. However, the following Examples will be provided for description, but the invention is not limited thereto.

[Comparative Example] Heat Efficiency of General Steam-Oxygen Gasification Method

A stoichiometric formula of the steam gasification reaction to 1g-mol of bituminous coal, calculated from the composition of the syngas generated from a GE-TEXACO gasifier [see DOE/NETL-2008/1331] is as follows:

CH_{0.9}O_{0.1} + 0.1H₂O +0.5O₂ → 0.55H₂ + 0.77CO + 0.23CO₂

In this case, the maximum theoretical heat efficiency calculated using the following formula is about 70%. On the other hand, 0.23 mol of carbon dioxide is emitted per 1g-mol of the carbon included in bituminous coal, and therefore 77% of the carbon may be used effectively.

Heat efficiency (%) = [(mole number of H₂ × unit heating value of H₂) + (mole number of CO × unit heating value of CO) × 100 (%)/[g-mol of coal × unit heating value of coal]

Then, a unit heating value of g-mol of coal was calculated by the enthalpy of a reaction in which carbon and hydrogen are burned to produce carbon dioxide and water.

**[Example 1] Heat Efficiency Improvement by the Present Invention**

When the C-CO₂ gasification reaction proceeded by 1, the steam gasification reaction proceeded by 0.6 with respect to 1 g-mol of lignite, and 15 % of the carbon monoxide produced by the gasification reaction is converted into hydrogen and carbon dioxide by the water gas shift reaction, the total stoichiometric formula is as follows. Then, a heat of reaction required for gasification is supplied by the combustion of the produced syngas.

CH_{0.8}O_{0.2} + 0.38H₂O +0.22O₂ → 0.78H₂ + 1.00CO + (-0.001CO)

In this case, the heat efficiency calculated using the calculation equation of heat efficiency is about 96%.

The Air Separation Unit (ASU) that separates oxygen from air and supplied to a gasifier has a very large effect on heat efficiency of the entire gasification process. A supplied oxygen amount according to the gasification method described in the present Example corresponds to about 44%, compared to Comparative Example 1, and thus energy supplied for ASU operation is considerably low. Further, in a general gasifier, a heat of reaction required for gasification is supplied by the combustion of coal that is a solid state, whereas a heat of reaction required for gasification is supplied by burning the syngas that is a gas state in the present invention, thus obtaining high combustion efficiency. The effect obtained from the present invention may be further improved by using a catalyst at the time of burning the syngas. In other words, combustion of the syngas is performed by using a catalyst, and thereby it is expected that a ratio of oxygen to fuel may be minimized.

**[Table 2]**

| | Comparative Example 1 | Example 1 | Efficiency increase (%) |
|---|---|---|---|
| Heat efficiency (%) | 70 | 96 | 37.7 |
| Carbon efficiency (%) | 77 | 100 | 29.9 |

**[Example 2] In the case of setting a ratio of hydrogen to carbon monoxide in syngas to 2**

After the gasification of coal, when synthetic oil was produced through the F-T reaction or methanol was produced, a ratio of hydrogen to carbon monoxide that is required is 2 to 1.

Fischer-Tropsch reaction nCO + 2nH₂ → (CH₂)n + nH₂O

Methanol synthesis reaction nCO + 2nH₂ → nCH₃OH

With respect to the syngas produced by the gasification, a ratio of hydrogen to carbon monoxide may be controlled by the water gas shift reaction. The syngas produced through a GE-TEXACO gasifier of Comparative Example 1 is converted such that a ratio of hydrogen to carbon monoxide is 2 to 1 through the water gas shift reaction.

CH_{0.9}O_{0.1} + 0.1H₂O +0.5O₂ → 0.88H₂ + 0.44CO + 0.56CO₂

In the present invention, the water gas shift reaction is performed in a gasifier, and thereby an additional reactor is not needed. Then, the steam gasification reaction and the C-CO₂ gasification reaction are preferably carried out by about 1 to 0.33, respectively. About 39% is converted into hydrogen and carbon dioxide through the water gas shift reaction, with respect to the total amount of carbon monoxide produced by the gasification reaction.

Then, a theoretical formula is as follows:

CH_{0.8}O_{0.25} + 0.38H₂O +0.22O₂ → 1.22H₂ + 0.61CO + 0.39CO₂

Heat efficiency, carbon efficiency and reduced amount of the generated carbon dioxide improved by the present invention was shown in Table 3

**[Table 3]**

| | After water gas shift reaction of Comparative Example 1 | Example 2 | Efficiency increase / generation amount decrease (%) |
|---|---|---|---|
| Heat efficiency (%) | 67.2 | 95.4 | 42.1 |
| Carbon efficiency (%) | 44 | 61 | 38.9 |
| CO₂ generation amount (%) | 56 | 39 | 30.5 |

As described in Examples 1 and 2, the carbon efficiency improved by the present invention may significantly reduce an amount of raw materials such as coal to be used. Thus, the cost of raw materials, the apparatus cost and operation cost for drying, grinding, transfer and storage of raw material (coal) may be reduced significantly. Also, the ASU apparatus cost and operation cost may be improved by 50% or more through catalytic combustion of the syngas. In addition, the amount of carbon dioxide to be emitted is reduced significantly, the used energy amount and costs of apparatus such as a CO₂ separation process, for example, an amine absorption process are improved significantly, and therefore economic efficiency of the entire process may be further improved.

## Claims

1. A gasification method of a carbon-containing material, the method comprising:
(a) reacting a carbon-containing material to be treated under the presence of a catalyst with steam to produce a syngas containing hydrogen, carbon monoxide and carbon dioxide;
(b) generating a carbon dioxide rich gas including at least one selected from
i) introducing a portion of the syngas that has been produced in step (a) into a combustion process, and
ii) separating hydrogen and carbon monoxide from the syngas produced in step (a); and
(c) recycling, to step (a), the carbon dioxide rich gas that has produced in step (b).

2. The gasification method of a carbon-containing material of claim 1, further comprising: (d) separating carbon dioxide from the syngas that has not been introduced to the combustion process in step (b).

3. The gasification method of a carbon-containing material of claim 2, further comprising: (e) recycling, to step (a), the carbon dioxide that has been separated in step (d).

4. The gasification method of a carbon-containing material of claim 2, further comprising: (f) recycling, to the combustion process of step (b), the carbon dioxide that has been separated in step (d).

5. The gasification method of a carbon-containing material of claim 1, wherein the catalyst includes transition metal catalysts, or catalysts containing alkaline metals or alkaline earth metals.

6. The gasification method of a carbon-containing material of claim 5, wherein a metal component included in the catalyst is one or a mixture of at least two, selected from the group consisting of Li, Na, K, Rb, Cs, Fr, Mg, Ca, Fe, Ni, Co, Cu and Zn

7. The gasification method of a carbon-containing material of claim 5, wherein the catalyst is a K₂CO₃ catalyst.

8. The gasification method of a carbon-containing material of claim 1, wherein the carbon-containing material is coal, biomass, or coke.
